# EUROPÄISCHE PATENTSCHRIFT

(11) **EP 2 758 254 B1**
(45) Veröffentlichungstag und Bekanntmachung des Hinweises auf die Patenterteilung: **06.01.2016**
(21) Anmeldenummer: 12759025.5
(22) Anmeldetag: 16.08.2012
(51) Int. Cl.: B60B 33/04, B60B 33/00, B60B 19/00, B60B 19/12, B60B 11/02

(54) **MECANUMRAD SOWIE MECANUMRADFAHRZEUG**
MECANUM WHEEL AND MECANUM-WHEELED VEHICLE
ROUE MÉCANUM ET VÉHICULE À ROUE MÉCANUM

(30) Priorität: 23.09.2011 DE 102011053903
(43) Veröffentlichungstag der Anmeldung: 30.07.2014
(73) Patentinhaber: Omniroll AG, 4515 Oberdorf (CH)
(72) Erfinder: ZDRAHAL, Pavel, 8330 Pfaffikon (CH); UEBELHART, Baudouin, 4515 Oberdorf (CH); SPINDLER, Zdenek, 56206 Usti nad Orlici (CZ)
(74) Vertreter: Wagner, Kilian
(86) Internationale Anmeldenummer: PCT/EP2012/065999
(87) Internationale Veröffentlichungsnummer: WO 2013/041310

(56) Entgegenhaltungen:
- WO-A1-01/26918
- WO-A1-01/79007
- US-A- 5 551 349
- US-A1- 2007 096 541

## Beschreibung

Die Erfindung betrifft ein Mecanumrad für omnidirektionale Fahrmanöver ohne mechanische Lenkung gemäß dem Oberbegriff des Anspruchs 1 mit einer eine Mehrzahl von in einer Umfangsrichtung nebeneinander angeordneten, jeweils um eine winklig zu einer ersten Felgendrehachse angeordnete Rollendrehachse verdrehbar gelagerte Rollen tragenden ersten Felge. Anders ausgedrückt sind die Rollen um winklig zur ersten Felgendrehachse angeordnete Rollendrehachsen rotierbar. Ferner betrifft die Erfindung ein Fahrzeug mit einer Mehrzahl derartiger Mecanumräder gemäß Anspruch 11.

Mecanumräder sind allgemein bekannt. Auf den Umfang der Felge des Rades sind mehrere drehbar gelagerte, in der Regel tonnenförmige Rollen, meist im Winkel von 45° zur Achse der Felge und damit des Rades drehbar angebracht. Nicht die Felge, sondern ausschließlich die vorgenannten Rollen stellen den Kontakt zum Boden her. Die Rollen haben keinen direkten Antrieb und können sich frei um ihre jeweilige Rollendrehachse drehen. Das gesamte Mecanumrad kann dagegen von einem Antriebsmotor mit veränderlichem Drehsinn und variabler Drehzahl angetrieben werden. Die mit Mecanumrädern ausgestatteten Fahrzeuge haben üblicherweise vier Räder, die in einem Rechteck angeordnet sind. Bei bekannten Mecanumrad betriebenen Fahrzeugen sind die geneigten Drehrollenachsen an der Auflageebene entweder sternförmig zur Fahrzeugmitte angeordnet oder die Drehrollenachsen liegen auf einer Kreisprojektion. Wie erwähnt ist die Drehzahl und die Drehrichtung jedes Mecanumrades einzeln anzusteuern, so dass durch individuelle Drehrichtungswahl der Mecanumräder gegenüber der Fahrbahnkraft Vektoren entstehen, welche durch die beweglichen Rollen zwei Richtungen ausbilden und in der Summe mit den Vektoren der anderen Räder zu einer Gesamtbewegungsrichtung für das Fahrzeug summieren.

Bisher wurde vergeblich versucht, den Mecanumradantrieb durchzusetzen bzw. weit zu verbreiten. So wurden mecanumradbetriebene Fahrzeuge entwickelt, in der Form von Förderfahrzeugen, Rollstühlen für Gehbehinderte Menschen, Transportfahrzeuge oder für die Robotik. Die Durchsetzung der Technologie ist bisher nicht gelungen, vermutlich weil beim Abrollen der Mecanumräder beim Kontaktwechsel zwischen zwei in Umfangsrichtung benachbarten Rollen zum Untergrund kurzzeittige undefinierte Fahrzustände resultieren, in denen das Fahrzeug "schwebt" bzw. nicht definiert einer gewünschten Bewegungsbahn folgt.

Aus der WO 2011/113562 A2 ist ein Mecanumradfahrzeug bekannt, dessen Mecanumräder jeweils zwei um eine gemeinsame Antriebswelle verdrehbare Felgen aufweisen, wobei die Felgen zu Bremszwecken relativ zueinander entlang der gemeinsamen Antriebswellenachse zueinander verstellbar sind. Auf diese Weise können die Felgen aufeinanderzu verstellt und die Rollen der einen Felge an der jeweils anderen Felge gebremst werden. Das Fahrverhalten des bekannten Mecanumradfahrzeugs wird durch die beschriebene Maßnahme nicht verbessert.

Aus der US 5,551,349 A ist ein gattungsgemäßes Mecanumrad bekannt, bei dem die Rollen zwischen zwei Felgenabschnitten angeordnet sind, die in radialer Richtung eine federnde Lagerung aufweisen.

Zum weiteren Stand der Technik werden die WO 01/79007 A1, die US 2007/096541 A1 sowie die WO 01/26918 A1 genannt.

Ausgehend von dem vorgenannten Stand der Technik liegt der Erfindung die Aufgabe zugrunde, ein Mecanumrad anzugeben, bei dem undefinierte Fahrzustände sicher vermieden werden. Das Mecanumrad soll sich bevorzugt auch zum Verfahren auf nicht planebenen Flächen eignen. Ferner besteht die Aufgabe darin, ein Fahrzeug mit derartigen Mecanumrädern anzugeben.

Diese Aufgabe wird hinsichtlich des Mecanumrades mit den Merkmalen des Anspruchs 1 und bei einem gattungsgemäßen Mecanumrad dadurch gelöst, dass das Mecanumrad zusätzlich zu der ersten Felge eine zweite Felge aufweist, wobei diese beiden Felgen gemeinsam über eine mit dem Mecanumrad verkoppelte oder koppelbare Antriebswelle verdrehbar verbunden sind, wobei auch die zweite Felge, wie die erste Felge eine Mehrzahl von in einer Umfangsrichtung nebeneinander angeordneten, jeweils um eine winklig zu einer zweiten Felgendrehachse angeordnete Drehachse verdrehbar gelagerte Rollen aufweist. Es sind also auch bei der zweiten Rolle mehrere um winklig zur zweiten Felgendrehachse angeordnete Rollendrehachsen rotierende Rollen vorgesehen. Die Verbindung der beiden Felgen zueinander erfolgt erfindungsgemäß über Dämpfungsmittel, die eine begrenzte Relativbewegung der ersten und der zweiten Felge zueinander zulassend ausgebildet sind. Erfindungsgemäß sind die Dämpfungsmittel derart ausgebildet sind, dass diese eine gedämpfte, begrenzte Relativbewegung zwischen den mindestens zwei Felgen in Umfangsrichtung zulassen, dass also die Felgen begrenzt gegeneinander verdrehbar sind. Alternativ oder bevorzugt zusätzlich, lassen die Dämpungsmittel eine Art Scherbewegung bzw. Parallelverschiebung der Felgen relativ zueinander zu, d.h., eine Relativbewegung senkrecht zu einer Mecanumraddrehachse und/oder senkrecht zu einer ersten Felgendrehachse und/oder senkrecht zu einer zweiten Felgendrehachse. Alternativ oder bevorzugt zusätzlich lassen die Dämpfungsmittel eine relative Kippbewegung der beiden Felgendrehachsen zueinander zu, insbesondere jeweils in einem Sturzwinkelbereich zu einer Mecanumraddrehachse, die bevorzugt von einer Antriebswelle definiert wird.

Hinsichtlich des Fahrzeuges wird die Aufgabe mit den Merkmalen des Anspruchs 11 gelöst, insbesondere dadurch, dass mehrere Mecanumräder an einer Plattform vorgesehen sind und dass die Mecanumräder, entweder über einen gemeinsamen, vorzugsweise jedoch über separate, jeweils einem der Mecanumräder zugeordneten Antrieb unabhängig voneinander mit unterschiedlichen Drehzahlen und/oder in unterschiedliche Drehrichtungen antreibbar sind.

Vorteilhafte Weiterbildungen sind in den Unteransprüchen angegeben. In den Rahmen der Erfindung fallen sämtliche Kombinationen aus zumindest zwei von in der Beschreibung, den Ansprüchen und/oder den Figuren offenbarten Merkmalen.

Die Erfindung hat erkannt, dass der Grund für das von einem Benutzer als schwebender, undefinierter Fahrzustand empfundene Fahrverhalten bei bekannten Mecanumrädern mit ausschließlich einer Felge und mit an dieser Felge in Umfangsrichtung nebeneinander angeordneten schrägen Rollen daher rührt, dass es Fahrzustände, insbesondere bei einem Kontaktwechsel zwischen benachbarten Rollen zum Untergrund gibt, bei denen lediglich eine der Rollen des Mecanumrades mit einem mehr oder weniger punktförmigen Kontaktbereich den Untergrund berührt. Hierdurch kann es zu einem minimalen driften des Mecanumrades und damit des Fahrzeuges kommen. Zur Beseitigung dieses Problems schlägt die Erfindung vor, zusätzlich zu der ersten, mit schräg angeordneten Rollen versehenen Felge mindestens eine weitere Felge mit schräg angeordneten Rollen vorzusehen und in einem Mecanumrad zu vereinigen, wobei die beiden Felgen in definierten Grenzen relativ zueinander, vorzugsweise wie später noch erläutert werden wird, omnidirektional, bewegbar, insbesondere verdrehbar, verschiebbar und verkippbar sind. Erfindungsgemäß sind die Dämpfungsmittel derart ausgebildet sind, dass diese eine gedämpfte, begrenzte Relativbewegung zwischen den mindestens zwei Felgen in Umfangsrichtung zulassen, dass also die Felgen begrenzt gegeneinander verdrehbar sind. Alternativ oder bevorzugt zusätzlich, lassen die Dämpungsmittel eine Art Scherbewegung bzw. Parallelverschiebung der Felgen relativ zueinander zu, d.h., eine Relativbewegung senkrecht zu einer Mecanumraddrehachse und/oder senkrecht zu einer ersten Felgendrehachse und/oder senkrecht zu einer zweiten Felgendrehachse. Alternativ oder bevorzugt zusätzlich lassen die Dämpfungsmittel eine relative Kippbewegung der beiden Felgendrehachsen zueinander zu, insbesondere jeweils in einem Sturzwinkelbereich zu einer Mecanumraddrehachse, die bevorzugt von einer Antriebswelle definiert wird. Um eine gewisse Relativbewegungsmöglichkeit der beiden Felgen zu ermöglichen, schlägt die Erfindung vor, die beiden gemeinsam antreibbaren, d.h. bis auf eine gegebenenfalls vorgesehene, begrenzte Relativverdrehbarkeitsmöglichkeit drehfest miteinander verbundenen Felgen über, insbesondere als Nabenstoßdämpfer ausgebildete, Dämpfungsmittel miteinander zu verbinden, die zum einen die Funktion haben, die vorerwähnte Relativbewegungsmöglichkeit zwischen den mindestens zwei Felgen zuzulassen und darüber hinaus zu begrenzen, um unzulässige Relativpositionen der Felgen zueinander zu vermeiden. Aufgrund der erfindungsgemäßen Ausgestaltung des Mecanumrades ergibt sich, dass zu jedem Betriebszustand, d.h. zu jeder Relativverdrehposition des mindestens zweifelgigen Mecanumrades relativ zu dem Untergrund sichergestellt ist, dass der Untergrund von mindestens zwei Rollen des Mecanumrades berührt wird - anders ausgedrückt berührt zu jedem Zeitpunkt mindestens eine Rolle jeder Felge des Mecanumrades den Untergrund, wodurch die im Stand der Technik auftretenden unerwünschten Driftbewegungen vermieden werden können. Durch den Abstand der mindestens zwei Berührungspunkte in Richtung der Achserstreckung des Mecanumrades kann darüber hinaus eine optimierte Abstützung des Rades am Untergrund sichergestellt werden. Je nach Ausgestaltung des Mecanumrades, wie später noch erläutert werden wird, in den meisten Betriebszuständen sogar mehr als zwei Kontaktbereiche des Mecanumrades zu dem Untergrund sichergestellt werden.

Darüber hinaus ist es für die praktische Einsatzfähigkeit eines mit nach dem Konzept der Erfindung ausgebildeten Mecanumrädern ausgestatteten Fahrzeuges wesentlich, dass die beiden, jeweils mit schräg zur jeweiligen Felgenachse angeordneten Rollen (die Rollendrehachsen verlaufen schräg, d.h. winklig zur jeweiligen Felgendrehachse) versehenen Felgen nicht starr miteinander verbunden, sondern begrenzt relativ zueinander bewegbar sind, vorzugsweise in den später noch zu erläuternden Richtungen, um in der Praxis auftretende, etwaige Unebenheiten des Untergrundes ausgleichen zu können, um hierdurch wiederum sicherzustellen, dass auch bei nicht optimal ebenen Flächen eine zumindest Zweipunktberührung jedes Mecanumrades mit dem Untergrund sichergestellt ist.

Im Hinblick auf die konkrete Ausgestaltung der Dämpfungsmittel gibt es unterschiedlichste Möglichkeiten. Besonders bevorzugt ist es, wenn die Dämpfungsmittel mindestens ein Dämpfungselement aus einem Elastomermaterial aufweist, welches so ausgebildet und angeordnet ist, dass es zumindest eine der vorgenannten Relativbewegungen, vorzugsweise sämtliche der vorgenannten Relativbewegungen in einem definierten Ausmaß zulässt.

Bevorzugt umfassen die Dämpfungsmittel zum Tragen des mindestens einen Dämpfungselementes ein Tragteil, gegenüber dem zumindest eine der beiden Felgen mittels des mindestens einen Dämpfungselementes relativbewegbar ist. Bevorzugt sind beide Felgen über, vorzugsweise jeweils, ein Dämpfungselement mit dem Trägerteil, insbesondere auf von einer der abgewandten Seiten, verbunden, wobei es sich als besonders vorteilhaft herausgestellt hat, wenn das Trägerteil, insbesondere unmittelbar, von einer gemeinsamen Antriebswelle von mindestens zwei Felgen antreibbar ist, wobei die Antriebswelle an dem Trägerteil festgelegt sein kann oder einteilig mit diesem ausgebildet sein kann. Bevorzugt ist die Antriebswelle lösbar drehfest mit dem Trägerteil gekoppelt oder koppelbar. Ganz besonders zweckmäßig ist es, wenn das Trägerteil zwischen den beiden Felgen aufgenommen ist und die Antriebswelle eine zentrische Öffnung einer inneren Felge durchsetzt und mit dem Trägerteil verbindbar ist. Im Falle des unmittelbaren Antriebs des Trägerteils von einer Antriebswelle wird eine Mecanumraddrehachse von der Drehachse des Trägerteils definiert, wobei bevorzugt zumindest eine der Felgendrehachsen, insbesondere sämtliche Felgendrehachsen des Mecanumrades relativ zu dieser Mecanumraddrehachse begrenzt bewegbar ist. Insbesondere in Umfangsrichtung und/oder senkrecht dazu und/oder kippwinklig bzw. sturzwinklig hierzu. Denkbar ist es auch, die Antriebswelle unmittelbar an eine erste Felge anzukoppeln und die weitere (zweite) Felge über die Dämpfungsmittel an die erste Felge anzubinden. In diesem weniger bevorzugten Fall wir die Mecanumraddrehachse von der ersten Felgendrehachse bestimmt.

Zur Anbindung des Trägerteils an das mindestens eine Dämpfungselement hat es sich als vorteilhaft herausgestellt, wenn das Trägerteil, mit vorzugsweise in Richtung der Drehachse des Trägerteils orientierten Fortsätzen in entsprechende Ausnahmen des Dämpfungselementes angreift, insbesondere an in Umfangsrichtung beabstandeten, bevorzugt mindestens drei, Stellen. Weiter bevorzugt ist es, wenn auch die Felge von der anderen Seite her in entsprechende Ausnehmungen im Dämpfungselement angreift, vorzugsweise in Umfangsrichtung und/oder in radialer Richtung versetzt zu den Eingriffsstellen des Trägerteils in das Dämpfungselement. Ganz besonders bevorzugt ist an jeder Stirnseite des Trägerteils ein Dampfungselement vorgesehen, an denen jeweils eine Felge festgelegt ist. Im Falle des Vorsehens, von zwei Dämpfungselementen ist es möglich, diese hinsichtlich ihres Dämpfungsverhaltens unterschiedlich oder identisch auszubilden.

Im Hinblick auf eine Verbesserung des Fahrverhaltens eines mit nach dem Konzept der Erfindung ausgebildeten Mecanumrädern ausgestatten Fahrzeugen hat es sich als synergistisch erwiesen, wenn zusätzlich zu dem Vorsehen von jeweils mehrere Rollen tragenden Felgen zumindest eine der Rollen der ersten Felge und/oder eine der Rollen der zweiten Felge, vorzugsweise sämtliche Rollen des Mecanumrades mindestens zwei Teilrollen umfassen, die unabhängig voneinander drehbar gelagert sind, vorzugsweise auf einer gedachten gemeinsamen Drehachse. Dabei sind die mehrteiligen Rollen vorzugsweise mit einer tonnenförmigen Hüllkontur versehen, wobei hierunter verstanden wird, dass der Durchmesser der Rollen mit zunehmendem Abstand zu einer Mittelebene abnimmt. Die Teilrollen einer Rolle sind in Richtung der Achserstreckung der vorzugsweise gemeinsamen Drehachse der Teilrollen voneinander beabstandet, wodurch in den meisten Betriebszuständen des Mecanumrades sichergestellt wird, dass mehr als zwei, insbesondere vier Kontaktstellten zwischen dem Untergrund und dem Mecanumrad bestehen.

Im Hinblick auf eine vorteilhafte konstruktive Ausgestaltung der Rollen hat es sich als vorteilhaft erwiesen, wenn zwei eine Rolle bildende Teilrollen, also ein Rollenpaar, an einem gemeinsamen Träger gehalten sind, der sich ausgehend von der Felge in einem Bereich zwischen die Rollen erstreckt, wobei der Träger vorzugsweise mit jeweils einem Arm seitlich in die Rollen eingreift und die Rollen gegenüber diesem Arm mit Hilfe von jeweils mindestens einem Wälzlager gelagert sind. Bevorzugt haben die Arme ein freies Ende, d.h., schützen sich nur innen an den gemeinsamen Trägern ab und sind außen frei.

Grundsätzlich ist es denkbar, dass die Teilrollen eines Teilrollenpaares um winklig zueinander angeordnete Teilrollendrehachsen verdrehbar sind - vorteilhaft im Hinblick auf eine optimale und definierte Bewegung des Mecanumrades hat es sich jedoch als vorteilhaft herausgestellt, wenn die Arme des Trägers eine gemeinsame Rollendrehachse für die voneinander beabstandeten und relativ zueinander verdrehbar angeordneten Teilrollen definiert.

Das Vorsehen von mehreren jeweils eine Rolle bildenden Teilrollen eröffnet die Möglichkeit, weiterbildungsgemäß die Teilrollen eines Teilrollenpaares bzw. einer Rolle zur Erzielung gewünschter bzw. spezieller Fahreigenschaften mit unterschiedlichen Oberflächenstrukturen und/oder aus unterschiedlichen Materialien bzw. Oberflächenmaterialen auszugestalten. Zusätzlich oder alternativ ist es möglich, die Rollen der ersten Felge und die Rollen der zweiten Felge mit einer voneinander unterschiedlichen Oberflächenstruktur und/oder voneinander unterschiedlichen Material auszubilden. So ist es beispielsweise möglich, die Oberfläche der Rollen der ersten Felge oder nur von Teilrollen dieser Rollen mit aus einem Elastomermaterial auszubilden und die Rollen und/oder die Teilrollen der zweiten Felge aus einem davon unterschiedlichen Material, beispielsweise aus Metall und/oder diese Rollen oder Teilrollen mit Spikes oder einem grobstolligen Geländeprofil zu versehen.

Die Erfindung führt auch auf ein Fahrzeug mit mindestens einem nach dem Konzept der Erfindung ausgebildeten Mecanumrad, insbesondere mit vier nach dem Konzept der Erfindung ausgebildeten Mecanumräder, wobei bevorzugt jedem Mecanumrad ein, noch weiter bevorzugt elektrischer Antrieb zum Antreiben des jeweiligen Mecanumrades um eine Mecanumraddrehachse zugeordnet ist, wobei diese Mecanumraddrehachse im Falle der festen Kopplung der Antriebswelle mit einer der Felgen von dieser Felgenachse definiert wird oder im bevorzugten Falle der Kopplung der Antriebswelle mit einem, vorzugsweise mittigen Trägerteil für Dampfungselemente von der Drehachse dieses Trägerteils. Selbstverständlich ist das Fahrzeug signalleitend mit den Antrieben verbundenen Steuermitteln versehen, um eine von einem Bediener gewünschte oder eine vorgegebene bzw. gewünschte Fahrzeugrichtung über eine geeignete Ansteuerung der Antriebe in an sich bekannter Weise anzusteuern.

Als besonders zweckmäßig hat es sich erwiesen, wenn das mindestens eine nach dem Konzept der Erfindung ausgebildete Mecanumrad mittels eines Lagerarms gelagert ist, wobei es noch weiter bevorzugt ist, wenn der Lagerarm das Mecanumrad mittelbar durch eine entsprechende Lagerung des Antriebs lagert. Der Lagerarm ist, vorzugsweise mittels eines an einer Fahrzeugplattform angebrachten Torsionsfederelementes um eine von der Mecanumraddrehachse beabstandete Tordierachse gedämpft in einem begrenzten Winkelbereich verschwenkbar und/oder um eine senkrecht zu der Tordierachse verlaufende zweite Lagerachse in begrenztem Umfang verschwenkbar bzw. auslenkbar. Als ganz besonders vorteilhaft hat es sich herausgestellt, zur Lagerung des Lagerarms Gummifederelemente einzusetzen, beispielsweise von der Firma Rosta auf dem Markt angebotene Gummifederelemente mit einer leicht progressiven Federkennlinie.

Im Hinblick auf die weitere Ausgestaltung des nach dem Konzept der Erfindung ausgebildeten Fahrzeugs gibt es die unterschiedlichsten Möglichkeiten. So kann das Fahrzeug beispielsweise als Personenfahrzeug, insbesondere für gehbehinderte Personen ausgebildet werden oder als Nutzfahrzeug.

Vorteilhafte Weiterbildungen und Einzelheiten der Erfindung ergeben sich aus der nachfolgenden Beschreibung bevorzugter Ausführungsbeispiele sowie anhand der Zeichnungen.

Die zeigen in:
- Fig. 1: eine Explosionsdarstellung eines bevorzugten Ausführungsbeispiels eines erfindungsgemäßen Mecanumrades,
- Fig. 2: den Aufbau einer aus zwei Teilrollen (Teilrollenpaar) bestehenden Rolle,
- Fig. 3: eine perspektivische Schrägansicht eines montierten Mecanumrades,
- Fig. 4: eine Schnittansicht durch das Mecanumrad gemäß Fig. 3,
- Fig. 5 und Fig. 6: unterschiedliche Ansichten eines Mecanumrades aus denen die begrenzte Relativverdrehbarkeit der beiden Felgen ersichtlich ist,
- Fig. 7: eine Darstellung des Mecanumrades aus der ersichtlich ist, dass zu jedem Betriebszustand bzw. zu jedem Zeitpunkt mindestens zwei Kontaktflächen des Mecanumrades zum Untergrund sichergestellt sind,
- Fig. 8 und Fig.9: zwei unterschiedliche Ansichten des Mecanumrades (aus denen die Parallelverschiebbarkeit der Felgen ersichtlich ist,
- Fig. 10: eine Ansicht des Mecanumrades, aus der die Sturzwinkelverkippbarkeit der beiden Felgen relativ zueinander ersichtlich ist,
- Fig. 11: eine Prinzipdarstellung des maximal möglichen Sturzwinkels, und
- Fig. 12: eine Explosionsdarstellung eines Mecanumrades mit Antrieb sowie einer fakultativen, bevorzugten Lagerung des Mecanumrades über einen gedämpft verschwenk- und verkippbaren Lagerarm.

In den Figuren sind gleiche Elemente und Elemente mit der gleichen Funktion mit den gleichen Bezugszeichen gekennzeichnet.

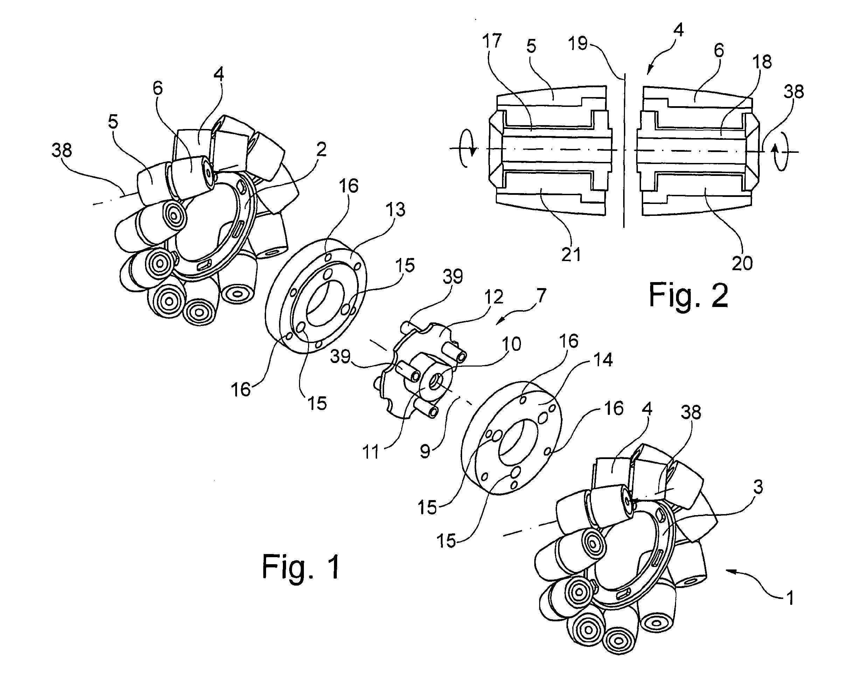

Anhand von Fig. 1 wird ein bevorzugter Aufbau eines erfindungsgemäßen Mecanumrades 1 beschrieben. Dieses umfasst im gezeigten Ausführungsbeispiel 2 jeweils als Radkranz ausgebildete Felgen, nämlich eine erste Felge 2 und eine zweite Felge 3. Beide Felgen 2, 3 sind gemeinsam (gekoppelt) mit einem nicht dargestellten Antrieb antreibbar.

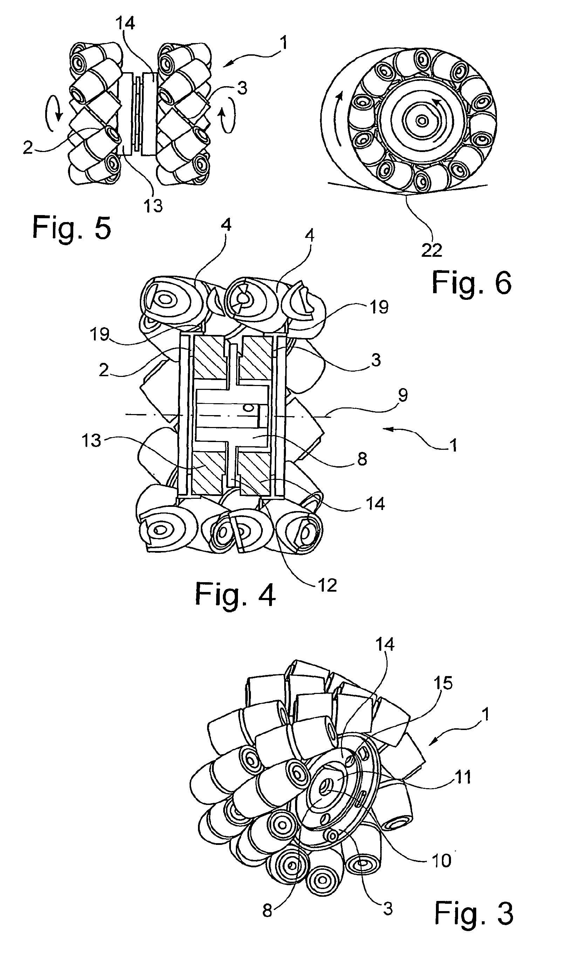

Zu erkennen ist, dass an jeder Felge 2, 3 mehrere in Umfangsrichtung nebeneinander angeordnete Rollen 4 verdrehbar angeordnet sind, wobei die Rollen 4 eine tonnenförmige Hüllkontur aufweisen, deren Durchmesser mit zunehmendem Abstand zur Rollenmitte abnimmt. Jede Rolle 4 besteht aus zwei Teilrollen, nämlich einer ersten und einer zweiten Teilrolle 5, 6, die später noch insbesondere anhand von Fig. 5 erläutert werden. Die Rollen 4 beider Felgen 2,3 sind um jeweils eine gedachte Rollenachse 38 rotierbar, die sich winklig zur jeweiligen Felgendrehachse erstreckt.

In einem Bereich zwischen den beiden Felgen 2, 3 sind als Nabenstoßdämpfer ausgebildete Dämpfungsmittel 7 vorgesehen. Diese umfassen in einer bevorzugten Ausführungsform ein zwischen den Felgen 2, 3 angeordnetes Trägerteil 8, dessen Drehachse eine Mecanumraddrehachse 9 definiert. Das Trägerteil 8 ist unmittelbar koppelbar mit einer nicht dargestellten Antriebswelle eines, insbesondere elektromotorischen Antriebs, wobei das Trägerteil 8 eine zentrische Wellenaufnahme 10 aufweist.

In radialer Richtung erstreckt sich von dem die Wellenaufnahme 10 aufweisenden Nabenbereich 11 ein scheibenförmiger Ring 12, der an jeder Seite jeweils drei gleichmäßig in Umfangsrichtung beabstandete Fortsätze 13 trägt, auf die auf zwei voneinander abgewandten Seiten des Ringes 12 jeweils ein Dämpfungselement 13, 14 aufsteckbar und durch geeignete, nicht dargestellte, beispielsweise in die Fortsätze 39 verschraubbaren Schrauben fixierbar ist. In den Dämpfungselementen 13, 14 sind entsprechende Aufnahmen 15 für die Fortsätze vorgesehen. Die Felgen 2, 3 sind mit Radialabstand zu den Aufnahmen in Fixieraufnahmen 16 fixierbar, insbesondere mittels geeigneter, nicht dargestellter Schrauben. Im montierten Zustand sind also die beiden Felgen 2, 3 über die beiden Dämpfungselemente 13, 14 an dem zentrischen Trägerteil 8 festgelegt, wodurch zum einen die beiden Felgen 2, 3 mittels eines gemeinsamen Antriebs in eine gemeinsame Umfangsrichtung antreibbar sind und zudem sichergestellt ist, dass die Felgen 2, 3 omnidirektional zueinander und in dem gezeigten Ausführungsbeispiel zusätzlich omnidirektional zu dem Trägerteil 8 und damit zu der Mecanumraddrehachse 9 in einem begrenzten, später noch zu erläuternden Umfang relativ bewegbar sind.

Fig. 2 zeigt den Aufbau einer bereits im Zusammenhang mit Fig. 1 erläuterten, eine tonnenförmige Hüllkontur aufweisenden Rolle 4, umfassend zwei Teilrollen 5, 6, die relativ zueinander verdrehbar gelagert und in Richtung der Erstreckung einer gemeinsamen Rollendrehachse beabstandet sind. In die Teilrollen 5, 6 erstreckt sich jeweils eine Lagerachse 17, 18 von einem mittigen Bereich her, d.h. von einem nur angedeuteten Träger 19 aus. Dieser ist an einer der Felgen 2, 3 winklig festgelegt und die Lagerachsen 17, 18 sind entweder einteilig mit diesem ausgebildet oder an diesem festgelegt. Die Lagerachsen 17, 18 weisen auf ihrer jeweiligen von dem Träger 19 abgewandten Seite ein freies Ende auf und die Teilrollen 5, 6 sind über nur angedeutete Wälzlager 20, 21 relativ zu diesen verdrehbar gelagert.

In Fig. 3 ist das in Fig. 1 in Explosionsdarstellung gezeigte Mecanumrad 1 in einem montierten Zustand gezeigt. Zentrisch zu erkennen ist der die Wellenaufnahme 10 aufweisende Nabenbereich 11 des mittigen Trägerteils sowie eines der Dämpfungselemente 14, welches über die an einem inneren Kreis angeordneten Aufnahmen 15 am Trägerteil 8 angeordnet ist und an einem äußeren Ring über entsprechende Aufnahmen 15 mit der zweiten Felge 3 verschraubt ist.

Es ergibt sich in der Folge eine Doppelanordnung von Rollen in Richtung der von dem Trägerteil 12 definierten Mecanumraddrehachse, wobei in dem konkreten Ausführungsbeispiel immer zwei Doppelrollen nebeneinander angeordnet sind und im Ruhezustand parallel ausgerichtete Rollendrehachsen aufweisen. Bei dynamischer Bewegung erfolgt eine belastungsspezifisch, begrenzte vektorielle Ausrichtung der beiden (oder mehrerer) Felgendrehachsen.

In Fig. 4 ist eine Schnittansicht durch ein montiertes Mecanumrad 1 gezeigt, das mit omnidirektional wirksamen Dämpfungsmittel versehen ist. Zu erkennen sind die beiden Felgen 2, 3 mit den daran über Träger 19 festgelegten, schräg in Bezug auf die Mecanumraddrehachse 9 angeordneten Rollen 4. Zu erkennen ist das zentrische Trägerteil 8 mit den seitlich daran angeordneten in gewissen Grenzen gummielastischen Dämpfungselementen 13, 14, welche jeweils mit einer der Felgen 2, 3 und innen mit einem umlaufenden Ring 12 des Trägerteils fixiert sind.

Anhand der Fig. 5 und 6 wird eine mögliche Relativverstellbarkeit der beiden Felgen ersichtlich. Gezeigt ist, dass die beiden Felgen 2, 3 gegeneinander tordierbar sind - die Dämpfungselemente 13, 14 lassen diese Tordierbarkeit in gewissen Grenzen zu. Die Tordiermöglichkeit bzw. Vorteilhaftigkeit kommt in Fig. 6 zum Ausdruck, wenn beispielsweise eine Kuhle oder Vertiefung in einem Untergrund 22 überfahren wird. Die Pfeile deuten dabei in den Fig. 5 und 6 die unterschiedlichen Relativdrehrichtungen an.

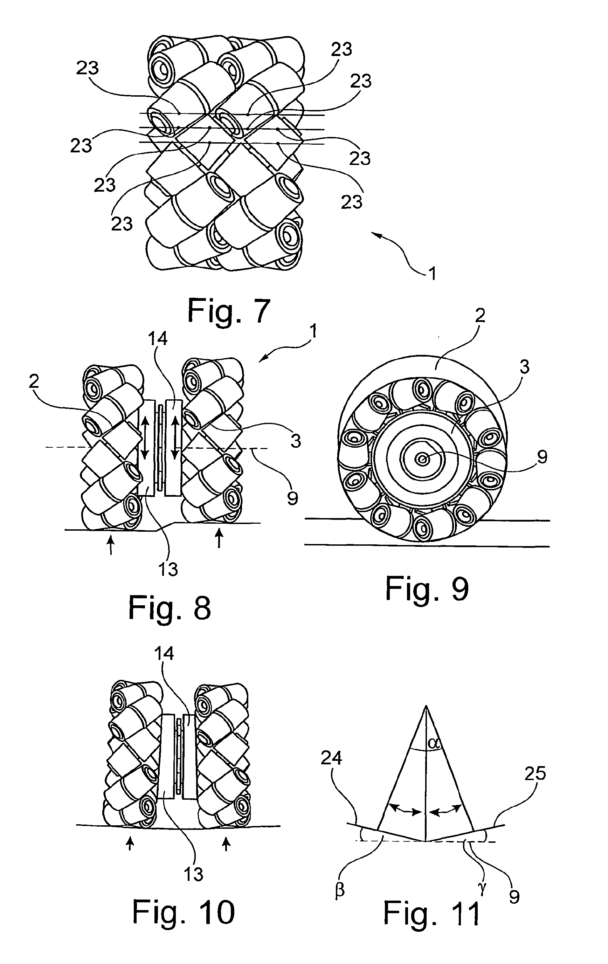

In Fig. 7 ist eine Mecanumrad 1 in einer Ansicht auf die "Lauffläche" gezeigt. Zu erkennen ist, dass zu jedem Zeitpunkt mindestens zwei Berührungspunkte 23 zwischen dem Mecanumrad 1 und dem Untergrund sichergestellt sind, im Regelfall sogar 4, wobei die Berührungspunkte zu jedem Zeitpunkt in Richtung der Längserstreckung der Mecanumraddrehachse voneinander beabstandet sind und von unterschiedlichen Rollen oder sogar Teilrollen gebildet bzw. bereit gestellt werden.

Fig. 8 und 9 zeigen eine weitere Relativverstellmöglichkeit der beiden Felgen 2, 3 eines Mecanumrades 1 zueinander. Zu erkennen ist, dass eine Parallelverschiebung zwischen den Felgen 2, 3, d.h. eine Relativbewegung senkrecht zur Mecanumraddrehachse 9 möglich ist. Anders ausgedrückt werden hierbei die Dämpfungselemente 13, 14 geschert.

Fig. 10 zeigt eine weitere Relativverstellmöglichkeit. Zu erkennen und in Fig. 11 schematisch erläutert ist, dass eine erste Felgendrehachse 24 der ersten Felge 2 relativ verkippbar ist zu einer zweiten Drehachse 25 der zweiten Felge 3. Hierzu werden die Dämpfungselemente 13, 14 in einem, hier beispielhaft oberen Bereich komprimiert und in einem diametral gegenüberliegenden Radialbereich, hier einem unteren Bereich (elastisch) gedehnt. In Fig. 11 ist zu erkennen, dass die Felgendrehachsen 24, 25 einen Winkel α (Kipplwinkel) einschließen und mit der Mecanumraddrehachse 9 jeweils einen Sturzwinkel β, γ, wobei gilt α+β+γ=180°.

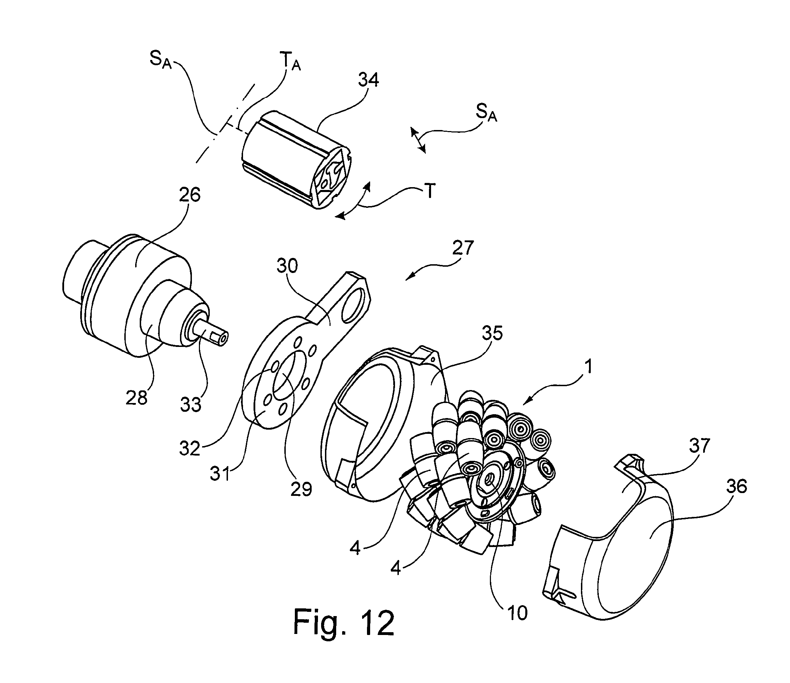

In Fig. 12 ist in einer Explosionsdarstellung ein Mecanumrad 1 mit Antrieb 26 sowie einer zusätzlichen Lagerung 27 gezeigt. Bei dem Antrieb 26 handelt es sich um einen Elektromotor, mit einem Nabenfortsatz 28, der im montierten Zustand eine Öffnung 29 in einem Lagerarm 30 durchsetzt. Der Lagerarm 30 ist mit über den Umfang der Öffnung 29 in einem Flanschbereich 31 angeordneten Öffnungen 32 am Antrieb 26 fixierbar, wodurch der Antrieb 26, zusammen mit dem Lagerarm 30 gedämpft verschwenkbar ist. Der Antrieb 26 umfasst eine Antriebswelle 33, die in die Wellenaufnahme 10 des Mecanumrades 1 einsetzbar und dort fixierbar ist. Die Antriebswelle 33 definiert dabei die Mecanumraddrehachse 9 relativ zu der mindestens einen Felgendrehachse, bevorzugt wie in dem gezeigten Ausführungsbeispiel beide Felgendrehachsen 24, 25 relativ bewegbar sind.

Der Lagerarm 30 ist an einem von dem Flanschbereich abgewandten Endbereich festlegbar an einem als Torsionsfederelement ausgebildeten Gummifederelement 34, welches eine begrenzte Tordierbewegung T, um eine Tordierachse T_{A} zulässt, sowie eine Kipp- bzw. Verschwenkbewegung S, um eine gedachte, senkrecht zur Torsionsachse T_{A} verlaufende Schwenkachse S_{A}.

An dem Lagerarm 30 ist eine innere Gehäuseschale 35 festlegbar, die das Mecanumrad 1 im montierten Zustand teilweise umgibt. An der inneren Gehäuseschale 35 ist dann wiederum eine äußere Gehäuseschale 36 fixierbar. Beide Gehäuseschalen 35, 36 umgeben das Mecanumrad 1, wobei eine Aussparung 37 für den Bodenkontakt der Rollen 4 des Mecanumrades 1 frei bleibt.

### Bezugszeichenliste

- 1: Mecanumrad
- 2: erste Felge
- 3: zweite Felge
- 4: Rollen
- 5: erste Teilrollen
- 6: zweite Teilrollen
- 7: Dämpfungsmittel
- 8: Trägerteil
- 9: Mecanumraddrehachse
- 10: Wellenaufnahme
- 11: Nabenbereich
- 12: Ring
- 13: Dämpfungselement
- 14: Dämpfungselement
- 15: Aufnahmen
- 16: Fixieraufnahmen
- 17: Lagerachse
- 18: Lager
- 19: Träger
- 20: Wälzlager (z.B. Kugellager)
- 21: Wälzlager
- 22: Untergrund
- 23: Berührungspunkte
- 24: erste Felgendrehachse
- 25: zweite Felgendrehachse
- 26: Antrieb
- 27: Lagerung
- 28: Nabenfortsätze
- 29: Öffnung
- 30: Lagerarm
- 31: Flanschbereich
- 32: Öffnungen
- 33: Antriebswelle
- 34: Gummifederelement
- 35: innere Gehäuseschale
- 36: äußere Gehäuseschale
- 37: Aussparung
- 38: Rollendrehachse
- 39: Fortsätze

- α: Winkel zwischen Felgendrehachsen
- β, γ: Sturzwinkel zwischen Felgendrehachsen und Mecanumraddrechachse

- T: Tordierbewegung
- T_{A}: Tordierachse
- S: Schwenkbewegung
- S_{A}: Schwenkachse

## Patentansprüche

1. Mecanumrad mit einer eine Mehrzahl von in einer Umfangsrichtung nebeneinander angeordneten, jeweils um eine winklig zu einer ersten Felgendrehachse (24) angeordnete Rollendrehachse (38) verdrehbar gelagerte Rollen (4) tragenden ersten Felge (2), wobei eine über eine gemeinsame Antriebswelle (33) mit der ersten Felge (2) antreibbare, eine Mehrzahl von in einer Umfangsrichtung nebeneinander angeordneten, jeweils um eine winklig zu einer zweiten Felgendrehachse (25) angeordnete Rollendrehachse (38) verdrehbar gelagerte Rollen (4) tragende zweite Felge (3) mit der ersten Felge (2) verbunden ist, **dadurch gekennzeichnet, dass** die zweite Felge mit der ersten Felge (2) über Dämpfungsmittel (7), die eine begrenzte Relativbewegung der ersten und der zweiten Felge (3) zueinander zulassend ausgebildet sind, verbunden ist, und
dass die Dämpfungsmittel (7) eine gedämpfte, begrenzte Relativbewegung zwischen der ersten und der zweiten Felge (2, 3)
in Umfangsrichtung
und/oder
senkrecht zu einer Mecanumraddrechachse (9)
und/oder
senkrecht zu der ersten und/oder zu der zweiten Felgendrehachse (25)
und/oder
kippwinklig zueinander
zulassend ausgebildet sind.

2. Mecanumrad nach Anspruch 1,
**dadurch gekennzeichnet,**
**dass** die Dämpfungsmittel (7) mindestens ein Dämpfungselement (13, 14) aus einem Elastomermaterial aufweisen, das fest mit der ersten und/oder zweiten Felge (2, 3) verbunden ist.

3. Mecanumrad nach Anspruch 2,
**dadurch gekennzeichnet,**
**dass** die Dämpfungsmittel (7) ein, vorzugsweise zwischen der ersten und der zweiten Felge (2, 3) angeordnetes, das mindestens eine Dämpfungselement (13, 14) tragende Trägerteil (8) umfassen, das vorzugsweise mit der gemeinsamen Antriebswelle (33) für die erste und die zweite Felge (2, 3) gekoppelt oder koppelbar ist.

4. Mecanumrad nach Anspruch 3,
**dadurch gekennzeichnet,**
**dass** das Trägerteil (8) über mehrere sich vorzugsweise parallel zur Mecanumraddrechachse (9) erstreckende Fortsätze (39) in das Dämpfungselement (13, 14) eingreift.

5. Mecanumrad nach einem der vorhergehenden Ansprüche,
**dadurch gekennzeichnet,**
**dass** zumindest eine der, vorzugsweise tonnenförmigen, Rollen (4) der ersten Felge (2) und/oder zumindest eine der, vorzugsweise tonnenförmigen, Rollen (4) der zweiten Felge (3), vorzugsweise sämtliche Rollen (4), mindestens zwei Teilrollen (5, 6) umfassen, die unabhängig voneinander drehbar gelagert sind.

6. Mecanumrad nach Anspruch 5,
**dadurch gekennzeichnet,**
**dass** zwei Teilrollen (5, 6) einer Rolle (4) ein Teilrollenpaar bilden und dass die Teilrollen (5, 6) des Teilrollenpaares von einem zwischen den Teilrollen (5, 6) angeordneten Träger (19) gehalten sind.

7. Mecanumrad nach Anspruch 6,
**dadurch gekennzeichnet,**
**dass** sich der Träger (19) mit jeweils einem seitlichen Trägerfortsatz, insbesondere zum Tragen jeweils eines Wälzlagers (20, 21), in die Teilrollen (5, 6) erstreckt, wobei die Trägerfortsätze jeweils ein freies Ende aufweisen.

8. Mecanumrad nach einem der Ansprüche 6 oder 7,
**dadurch gekennzeichnet,**
**dass** die Teilrollen (5, 6) eines Teilrollenpaares unabhängig voneinander um dieselbe gedachte Rollendrehachse (38) oder um unterschiedlich, winklig zueinander angeordnete Rollendrehachsen (38) drehbar sind.

9. Mecanumrad nach einem der Ansprüche 6 bis 8,
**dadurch gekennzeichnet,**
**dass** die Teilrollen (5, 6) eines Teilrollenpaares eine voneinander unterschiedliche Oberflächenstruktur und/oder ein voneinander unterschiedliches Oberflächenmaterial umfassen.

10. Mecanumrad nach einem der vorhergehenden Ansprüche,
**dadurch gekennzeichnet,**
**dass** die Rollen (4) der ersten Felge (2) und die Rollen (4) der zweiten Felge (3) eine voneinander unterschiedliche Oberflächenstruktur und/oder ein voneinander unterschiedliches Oberflächenmaterial umfassen.

11. Fahrzeug mit mindestens einem Mecanumrad (1) nach einem der vorhergehenden Ansprüche, dem ein, vorzugsweise elektrischer, Antrieb (26) zum Antreiben des Mecanumrades (1) um eine Mecanumraddrechachse (9) zugeordnet ist.

12. Fahrzeug nach Anspruch 11,
**dadurch gekennzeichnet,**
**dass** dem Mecanumrad (1), insbesondere dem Antrieb (26) des Mecanumrades (1) ein Lagerarm (30) zugeordnet ist, der, vorzugsweise mittels eines Torsionsfederelementes (34) um eine von der Mecanumraddrechachse (9) beabstandete Tordierachse (T_{A}) gedämpft in einem begrenzten Winkelbereich verschwenkbar und/oder um eine senkrecht zu der Tordierachse (T_{A}) verlaufende zweite Lagerachse auslenkbar ist.

13. Fahrzeug nach einem der Ansprüche 11 oder 12,
**dadurch gekennzeichnet,**
**dass** das Fahrzeug als Personenfahrzeug und/oder als Nutzfahrzeug ausgebildet ist.

## Claims

1. A Mecanum wheel having a first rim (2) carrying a plurality of rollers (4) arranged next to one another in a circumferential direction, each mounted about a roller axis of rotation (38) which is arranged at an angle to a first rim axis of rotation (24), wherein a second rim (3) which is driveable via a common driveshaft (33) with the first rim (2) and carrying a plurality of rollers (4) arranged next to one another in circumferential direction each rotatably mounted about a roller axis of rotation (38) arranged at an angle to a second rim axis of rotation (25), is connected to the first rim (2),
**characterized in that**
the second rim is connected to the first rim (2) via damping means (7) which are configured to allow a limited relative movement of the first and the second rim (3) to one another, and that the damping means (7) are configured to allow a dampened, limited relative movement between the first and the second rim (2, 3)
in circumferential direction
and/or
perpendicularly to a Mecanum wheel axis of rotation (9)
and/or
perpendicularly to the first
and/or
to the second rim axis of rotation (25)
and/or
at an angle of tilt relative to one another.

2. The Mecanum wheel according to claim 1,
**characterized in that**
the damping means (7) comprise at least one damping element (13, 14) of an elastomer material, which is firmly connected to the first and/or the second rim (2, 3).

3. The Mecanum wheel according to claim 2,
**characterized in that**
the damping means (7) further comprise a carrier part (8) which is preferably arranged between the first and the second rim (2, 3) and carries the at least one damping element (13, 14), which carrier part (8) preferably is or can be coupled to the common driveshaft (33) for the first and the second rim (2, 3).

4. The Mecanum wheel according to claim 3,
**characterized in that**
the carrier part (8) engages in the damping element (13, 14) via multiple extensions (39) which preferably extend parallel to Mecanum wheel axis of rotation (9).

5. The Mecanum wheel according to any one of the preceding claims,
**characterized in that**
at least one, of the preferably barrel-shaped rollers (4) of the first rim (2) and/or at least one of the preferably barrel-shaped rollers (4) of the second rim (3), preferably all the rollers (4), comprise at least two part rollers (5, 6) which are rotatably mounted independently of one another.

6. The Mecanum wheel according to claim 5,
**characterized in that**
two part rollers (5, 6) of a roller (4) form a part roller pair and that the part rollers (5, 6) of the part roller pair are held by a carrier (19) which is arranged between the part rollers (5, 6).

7. The Mecanum wheel according to claim 6,
**characterized in that**
the carrier (19) each with a lateral carrier extension in particular for carrying a rolling bearing (20, 21) each, extends into the part rollers (5, 6), wherein the carrier extensions each have a free end.

8. The Mecanum wheel according to any one of claims 6 or 7,
**characterized in that**
the part rollers (5, 6) of a part roller pair are rotatable independently of one another about the same imaginary roller axis of rotation (38) or about rollers axes of rotation (38) which are arranged differently, at an angle to one another.

9. The Mecanum wheel according to any one of claims 6 to 8,
**characterized in that**
the part rollers (5, 6) of a part roller pair have a surface structure that differs from one another and/or a surface material that differs from one another.

10. The Mecanum wheel according to any one of the preceding claims,
**characterized in that**
the rollers (4) of the first rim (2) and the rollers (4) of the second rim (3) have a surface structure that is different from one another and/or a surface material that is different from one another.

11. A vehicle having at least one Mecanum wheel (1) according to any one of the preceding claims, which is assigned a preferably electric drive (26) for driving the Mecanum wheel (1) about a Mecanum wheel axis of rotation (9).

12. The vehicle according to claim 11,
**characterized in that**
the Mecanum wheel (1), in particular the drive (26) of the Mecanum wheel (1) is assigned a bearing arm (30), which is pivotable, preferably by means of a torsion spring element (34), in a dampened manner in a limited angular range about a torsion axis (T_{A}) spaced apart from the Mecanum wheel axis of rotation (9) and/or is deflectable about a second bearing axis running perpendicularly to the torsion axis (T_{A}).

13. The vehicle according to any one of claims 11 or 12,
**characterized in that**
the vehicle is designed as a passenger vehicle and/or as a utility vehicle.

## Revendications

1. Roue mécanum comprenant une première jante (2) supportant une pluralité de rouleaux (4) disposés les uns à côté des autres dans une direction circonférentielle, respectivement montés rotatifs autour d'un axe de rotation de rouleau (38) disposé selon un certain angle par rapport à un premier axe de rotation de jante (24), une deuxième jante (3) pouvant être entraînée avec la première jante (2) par le biais d'un arbre d'entraînement (33) commun, supportant une pluralité de rouleaux (4) disposés les uns à côté des autres dans une direction circonférentielle, respectivement montés rotatifs autour d'un axe de rotation de rouleau (38) disposé selon un certain angle par rapport à un deuxième axe de rotation de jante (25), étant reliée à la première jante (2),
**caractérisée en ce**
**que** la deuxième jante est reliée à la première jante (2) par le biais de moyens d'amortissement (7) qui sont configurés pour autoriser un mouvement relatif limité de la première et de la deuxième jante (3) l'une par rapport à l'autre, et en ce que les moyens d'amortissement (7) sont configurés pour autoriser un mouvement relatif amorti limité entre la première et la deuxième jante (2, 3)
dans le sens circonférentiel
et/ou
perpendiculairement à un axe de rotation de la roue mécanum (9) et/ou
perpendiculairement au premier et/ou au deuxième axe de rotation de jante (25)
et/ou
selon un angle d'inclinaison mutuel.

2. Roue mécanum selon la revendication 1,
**caractérisée en ce**
**que** les moyens d'amortissement (7) possèdent au moins un élément d'amortissement (13, 14) en un matériau élastomère qui est relié à demeure à la première et/ou la deuxième jante (2, 3).

3. Roue mécanum selon la revendication 2,
**caractérisée en ce**
**que** les moyens d'amortissement (7) comprennent une pièce porteuse (8) disposée de préférence entre la première et la deuxième jante (2, 3) qui supporte ledit élément d'amortissement (13, 14) et qui est de préférence accouplée ou peut être accouplée avec l'arbre d'entraînement (33) commun pour la première et la deuxième jante (2, 3).

4. Roue mécanum selon la revendication 3,
**caractérisée en ce**
**que** la pièce porteuse (8) vient en prise dans l'élément d'amortissement (13, 14) par le biais de plusieurs prolongements (39) qui s'étendent de préférence parallèlement à l'axe de rotation de la roue mécanum (9).

5. Roue mécanum selon l'une des revendications précédentes,
**caractérisée en ce**
**qu'**au moins l'un des rouleaux (4), de préférence en forme de barillet, de la première jante (2) et/ou au moins l'un des rouleaux (4), de préférence en forme de barillet, de la deuxième jante (3), de préférence tous les rouleaux (4), comprennent au moins deux rouleaux partiels (5, 6) qui sont montés de manière à pouvoir tourner indépendamment les uns des autres.

6. Roue mécanum selon la revendication 5,
**caractérisée en ce**
**que** deux rouleaux partiels (5, 6) d'un rouleau (4) forment une paire de rouleaux partiels et que les rouleaux partiels (5, 6) de la paire de rouleaux partiels sont maintenus par un élément porteur (19) disposé entre les deux rouleaux partiels (5, 6).

7. Roue mécanum selon la revendication 6,
**caractérisée en ce**
**que** l'élément porteur (19) s'étend respectivement avec un prolongement d'élément porteur, notamment en vue de supporter à chaque fois un palier de roulement (20, 21), dans les rouleaux partiels (5, 6), les prolongements d'élément porteur possédant respectivement une extrémité libre.

8. Roue mécanum selon l'une des revendications 6 ou 7,
**caractérisée en ce**
**que** les rouleaux partiels (5, 6) d'une paire de rouleaux partiels peuvent tourner indépendamment l'un de l'autre autour du même axe de rotation de rouleau (38) considéré ou autour d'axes de rotation de rouleau (38) différents disposés selon un certain angle l'un par rapport à l'autre.

9. Roue mécanum selon l'une des revendications 6 ou 8,
**caractérisée en ce**
**que** les rouleaux partiels (5, 6) d'une paire de rouleaux partiels comprennent des structures de surface différentes l'une de l'autre et/ou des matériaux de surface différents l'un de l'autre.

10. Roue mécanum selon l'une des revendications précédentes,
**caractérisée en ce**
**que** les rouleaux (4) de la première jante (2) et les rouleaux (4) de la deuxième jante (3) comprennent des structures de surface différentes l'une de l'autre et/ou des matériaux de surface différents l'un de l'autre.

11. Véhicule équipé d'au moins une roue mécanum (1) selon l'une des revendications précédentes, à laquelle est associé un mécanisme d'entraînement (26) de préférence électrique destiné à entraîner la roue mécanum (1) autour d'un axe de rotation de la roue mécanum (9).

12. Véhicule selon la revendication 11,
**caractérisé en ce**
**qu'**un bras support (30) est associé à la roue mécanum (1), notamment au mécanisme d'entraînement (26) de la roue mécanum (1), lequel est de préférence amorti au moyen d'un élément ressort de torsion (34) autour d'un axe de torsion (T_{A}) espacé de l'axe de rotation de la roue mécanum (9) et peut pivoter dans une plage angulaire limitée et/ou peut être dévié autour d'un deuxième axe de palier qui s'étend perpendiculairement à l'axe de torsion (T_{A}).

13. Véhicule selon l'une des revendications 11 ou 12,
**caractérisé en ce**
**que** le véhicule est réalisé sous la forme d'un véhicule de tourisme et/ou d'un véhicule utilitaire.
